# EUROPÄISCHE PATENTANMELDUNG

(11) **EP 0 598 281 A1**
(43) Veröffentlichungstag der Anmeldung: **25.05.1994**
(21) Anmeldenummer: 93117788.5
(22) Anmeldetag: 03.11.1993
(51) Int. Cl.: E03C 1/322, F16B 21/04

(54) **Verbindungsanordnung für Montagebauteile, insbesondere zur Vorwandmontage von Sanitärbauteilen**

(30) Priorität: 17.11.1992 DE 4238703
(71) Anmelder: Pauli, Willi, D-53619 Rheinbreitbach (DE); Menden, Reinhard, D-53604 Bad Honnef (DE)
(72) Erfinder: Pauli, Willi, D-53619 Rheinbreitbach (DE); Menden, Reinhard, D-53604 Bad Honnef (DE)
(74) Vertreter: Patentanwälte Ostriga & Sonnet

(57) **Zusammenfassung**

Eine Verbindungsanordnung (10) für Montagebauteile (11, 12) besitzt ein Befestigungselement ((13) zur Verbindung mindestens eines eine schlitzartige Öffnung (25) aufweisenden Primärbauteils ((11) mit einem Sekundärbauteil (12), auf welchem sich das Betätigungselement (14) mit einer Widerlagerfläche (20) abgestützt und bei seiner Drehbetätigung in Spannrichtung mittels eines Schaftes (15), der das Sekundärbauteil (12) durchsetzt und der mit einem Klemmkörper (16) drehfest und mindestens zugfest verbunden ist, zwei beiderseits des Schaftes (15) angeordnete und sich quer zur Schaftlängsachse (bei x) erstreckende Klemmflächen (30) des Klemmkörpers (16) gegen die schlitzartige Öffnung begrenzende Hintergriffsflächen (28) zieht.

Das Befestigungselement (13) soll mit einer möglichst geringen Drehbewegung eine zuverlässige Schnellbefestigung ermöglichen.

Hierzu ist das Betätigungselement (14) zum Zwecke einer Drehverstellung des Klemmkörpers (16) auch drehfest mit dem Schaft (15) verbunden. Zudem schließt sich an jede Klemmfläche (30), bezüglich der jeweiligen Drehverstellrichtung vorgelagert, eine zur Schaftlängsachse (bei x) geneigte und in Drehverstellrichtung gegen die benachbarte Hintergriffsfläche (28) ansteigende Spannfläche (27) an, so daß die Drehverstellung der Spannfläche (27) entgegen einer in Schaftlängsrichtung (bei x) wirkenden Federrückstellkraft erfolgt.

## Beschreibung

Die Erfindung betrifft eine Verbindungsanordnung für Montagebauteile, wie insbesondere zur Vorwandmontage von Sanitärbauteilen, mit einem Befestigungselement zur Verbindung mindestens eines eine schlitzartige Öffnung aufweisenden Primärbauteils, wie z.B. C-Profil, Langlochlasche od. dgl., mit einem Sekundärbauteil, auf welchem sich das Betätigungselement mit einer Widerlagerfläche abgestützt und bei seiner Drehbetätigung in Spannrichtung mittels eines Schaftes, der das Sekundärbauteil durchsetzt und der mit einem Klemmkörper drehfest und mindestens zugfest verbunden ist, zwei beiderseits des Schaftes angeordnete und sich quer zur Schaftlängsachse erstreckende Klemmflächen eines Klemmkörpers gegen die schlitzartige Öffnung begrenzende Hintergriffsflächen zieht.

Mit einer derartigen, bekannten Verbindungsanordnung werden z.B. Vorwände für die Montage von Sanitärbauteilen aus C-Profilschienen aufgebaut, wobei beabstandete C-Profilschienen mittels der bekannten Verbindungsanordnung miteinander verbunden werden. Beim Stand der Technik besteht die Verbindungsanordnung aus einer Hammerkopfschraube als Klemmkörper, welche in einem Langloch eines Befestigungsteils (Sekundärbauteil) angeordnet ist und eine C-Profilschiene (Primärbauteil) hintergreift. Durch Zugrundedrehen einer Mutter werden Sekundär- und Primärbauteil miteinander verbunden.

Diese Art der Befestigung hat zum einen den Nachteil, daß umständlich und mit einem relativ großen Zeitaufwand eine Vielzahl von Drehbewegungen für das Zugrundedrehen der Mutter notwendig ist und daß darüber hinaus beim Anziehen der Mutter ständig die Gefahr besteht, daß sich der Hammerkopf aus der gewünschten, quer zum Schlitz der C-Profilschiene befindlichen Stellung dreht. Häufig ist es des weiteren notwendig, während des Zugrundedrehens der Mutter die Stellung des Hammerkopfes zu korrigieren.

Der Erfindung liegt daher die Aufgabe zugrunde, ein Befestigungselement zu entwickeln, welches mit einer möglichst geringen Drehbewegung eine zuverlässige Schnellbefestigung ermöglicht.

Die Lösung der Aufgabe ergibt sich im wesentlichen durch die Merkmale des Kennzeichenteils des Patentanspruchs 1, wonach das Betätigungselement zum Zwecke einer Drehverstellung des Klemmkörpers auch drehfest mit dem Schaft verbunden ist, daß sich an jede Klemmfläche, bezüglich der jeweiligen Drehverstellrichtung vorgelagert, eine zur Schaftlängsachse geneigte und in Drehverstellrichtung gegen die benachbarte Hintergriffsfläche ansteigende Spannfläche anschließt und daß die Drehverstellung der Spannfläche entgegen einer in Schaftlängsrichtung wirkenden Federrückstellkraft erfolgt.

Durch die erfindungsgemäße Verbindungsanordnung wird es auf vorteilhafte Weise möglich, ein Primär- und ein Sekundärbauteil durch eine geringfügige Drehung des Befestigungselements schnell und zuverlässig miteinander zu verbinden, wobei dem Klemmkörper auch Drehbegrenzungsanschläge zugeordnet sein können, welche die optimale Klemmstellung des Befestigungselements garantieren. Zur möglichst schnellen Befestigung ist der Drehwinkel durch die Anschläge auf ca. 90^{o} begrenzt.

Eine Ausführungsform des erfindungsgemäßen Befestigungselementes ist darüber hinaus dadurch gekennzeichnet, daß Betätigungselement, Schaft und Klemmkörper einstückig-stoffschlüssig ausgebildet sind. Bei dieser erfindungsgemäßen Lösung ist zum einen der Herstellungsaufwand und zum anderen der Aufwand für die Montage des Befestigungselementes deutlich geringer.

Bei einer weiteren vorteilhaften Ausführungsform der Erfindung ist das Betätigungselement und der Schaft als Bolzen ausgebildet, der einen mit Schlüsselflächen versehenen Bolzenkopf aufweist und die Bauteile zwischen einer zum Sekundärbauteil weisenden, durch die Unterseite des Bolzenkopfes gebildeten Widerlagerfläche und einer weiteren, ebenfalls zum Sekundärbauteil weisenden, durch die Klemmfläche des Klemmkörpers gebildeten Widerlagerfläche verspannbar. Diese erfindungsgemäße Lösung erlaubt zum einen die Verwendung handelsüblicher Bolzen und zum anderen eine einfache Betätigung des Befestigungselements, wobei Primär- und Sekundärbauteil zwischen den Widerlagerflächen des Bolzenkopfes und des Klemmkörpers sicher gehalten sind.

Bei einer bevorzugten Ausführungsform der Erfindung ist zwischen dem Sekundärbauteil und der Widerlagerfläche des Betätigungselementes mindestens ein Druckfederelement angeordnet. Dieses, z.B. aus zwei Tellerfedern bestehende Druckfederelement verbessert auf vorteilhafte Weise die Verbindung zwischen Primarund Sekundärbauteil, ohne daß es notwendig ist, daß das Befestigungselement als solches federnde Eigenschaften aufweist.

Bei einer besonders bevorzugten Ausführungsform ist darüber hinaus auf dem Schaft zwischen der Unterseite des Sekundärbauteils und der Klemmfläche des Klemmkörpers eine Distanzscheibe angeordnet. Diese Distanzscheibe dient zur Vormontage des Befestigungselementes am Sekundärbauteil, wobei das Befestigungselement so in eine z.B. langlochartige Ausnehmung des Sekundärbauteils eingeschoben werden kann, daß Flächenbereiche des Sekundärbauteils zwischen der zur Distanzscheibe weisenden Tellerfeder und der Distanzscheibe selbst leicht klemmend gehalten sind. In diesem Zusammenhang ist jedoch von Bedeutung, daß die Dicke der Distanzscheibe geringer ist als die Wandstärke des Primärbauteils, weil ansonsten bei einer Drehung des Klemmkörpers eine Verklemmung von Primär- und Sekundärbauteil nicht zustande käme.

Darüber hinaus ist jedoch auch zu beachten, daß der Gesamtfederweg der Tellerfedern größer ist, als die Differenz zwischen der Dicke der Distanzscheibe und der Wandstärke des Primärbauteils, damit ein vollständiges Aufeinanderliegen der Tellerfedern im verklemmten Zustand vermieden wird.

Des weiteren umfaßt die Erfindung auch speziell ausgebildete, laschen- und winkelartige Sekundärbauteile, mit denen unter Einsatz der Befestigungselemente eine Verbindung mit zwei oder mehreren Primärbauteilen ermöglicht wird.

Weitere Vorteile der Erfindung ergeben sich aus den nachfolgenden Unteransprüchen sowie aus der Beschreibung. Es zeigen:
Fig. 1 einen Schnitt durch ein Befestigungselement,
Fig. 2 einen Schnitt durch Primär- und Sekundärbauteil sowie eingesetztem, unverspanntem Befestigungselement,
Fig. 3 Darstellung nach Fig. 2 mit dem ca. um 45^{o} gedrehtem Befestigungselement,
Fig. 4 Darstellung nach Fig. 2 mit um 90^{o} gedrehtem und verspanntem Befestigungselement,
Fig. 5 ein laschenartiges Sekundärbauteil zur Verbindung zweier paralleler C-Profilschienen,
Fig. 6 ein laschenartiges Sekundärbauteil zur Verbindung zweier T-förmig aneinanderstoßender C-Profilschienen,
Fig. 7 ein laschenartiges Sekundärbauteil zur Verbindung stirnseitig aneinanderstoßender C-Profilschienen,
Fig. 8 ein laschenartiges Sekundärbauteil mit einer schlüssellochartigen Ausnehmung zur Verbindung stirnseitig aneinanderstoßender C-Profilschienen,
Fig. 9 einen Schnitt durch ein als Haltewinkel ausgebildetes Sekundärbauteil,
Fig. 10 eine Ansicht des Haltewinkels entsprechend dem Ansichtspfeil x in Fig. 9,
Fig. 11 ein laschenartiges Sekundärbauteil zur Verbindung zweier T-förmig aneinanderstoßender C-Profilschienen mittels unterschiedlicher Befestigungsarten,
Fig. 12 ein laschenartiges Sekundärbauteil zur Verbindung zweier T-förmig aneinanderstoßender C-Profilschienen mittels unterschiedlicher Befestigungsarten und
Fig. 13 eine Ansicht des laschenartigen Sekundärbauteils entsprechend Ansichtspfeil XIII in Fig. 12.

In den Zeichnungen ist eine Verbindungsanordnung für Montagebauteile, insbesondere zur Vorwandmontage von Sanitärbauteilen, insgesamt mit der Bezugsziffer 10 bezeichnet.

Die Verbindungsanordnung 10 besteht aus einem Primärbauteil 11, einem Sekundärbauteil 12 und einem Befestigungselement 13.

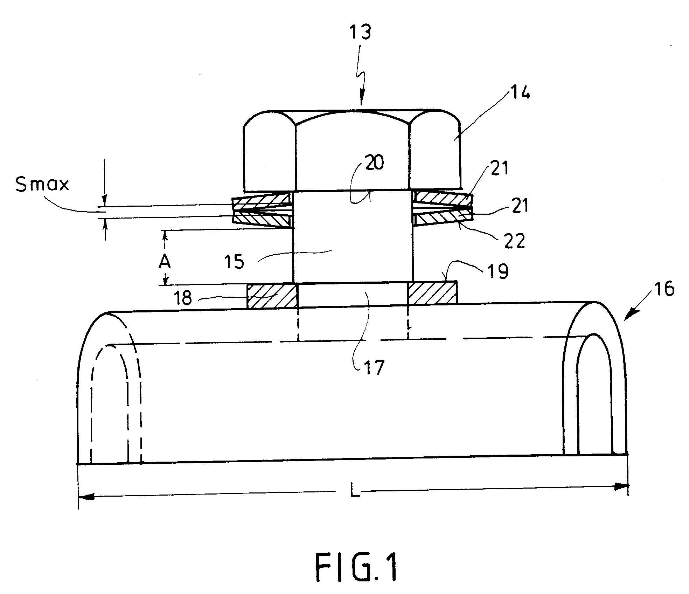

In Fig. 1 ist ein Befestigungselement 13 in Alleinstellung dargestellt. Es besteht aus einem Betätigungselement 14, einem Schaft 15 sowie einem Klemmkörper 16. Bei dem in Fig. 1 dargestellten Ausführungsbeispiel ist das Betätigungselement 14 und der Schaft 15 stoffschlüssig-einstückig als Bolzen mit Bolzenkopf ausgebildet, wobei der Bolzen mit dem Klemmkörper 16 verschweißt ist. Der Schaft 15 weist benachbart des Klemmkörpers 16 in einem Bereich 17 einen geringeren Durchmesser auf, wobei dort eine Distanzscheibe 18 einseitig am Klemmkörper 16 anliegend angeordnet ist. Zwischen einer Fläche 19 der Distanzscheibe 18 und einer Widerlagerfläche 20 des Betätigungselements 14 sind darüber hinaus zwei Tellerfedern 21 auf dem Schaft 15 angeordnet. Die beiden Tellerfedern 21 weisen einen maximalen Federweg Sₘₐₓ auf.

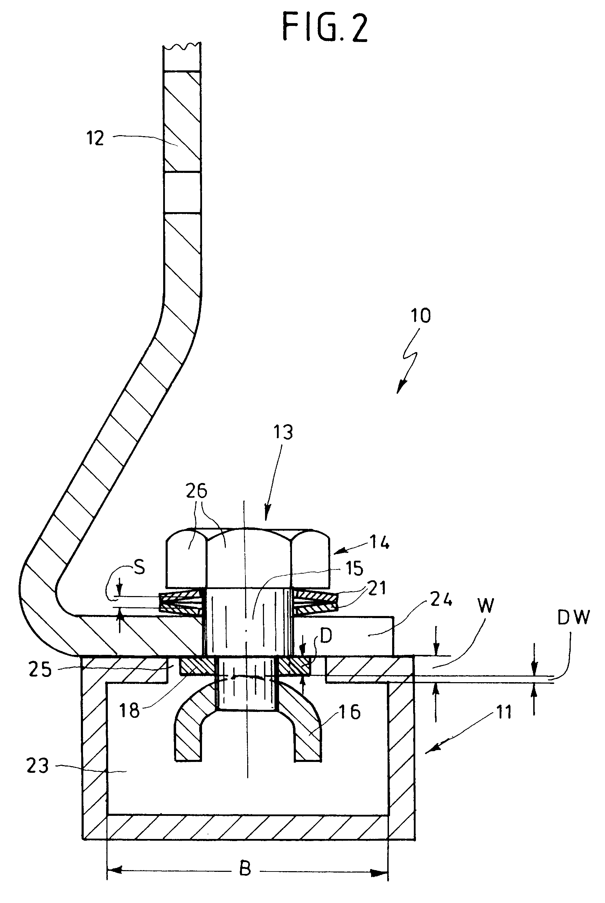

Ein zwischen einer zur Distanzscheibe 18 weisenden Unterfläche 22 der Tellerfeder 21 und der Fläche 19 der Distanzscheibe 18 gelegener Bereich A ist beim Einschieben des Befestigungselements 13 in ein in Fig. 2 dargestelltes Langloch 24 eines Sekundärbauteiles 12 für die dem Langloch 24 benachbarten Flächenbereiche des Sekundärbauteils 12 vorgesehen, die dort zum Zwecke der Vormontage leicht klemmend gehalten werden.

Letztlich weist der Klemmkörper 16 eine Länge L auf, die im wesentlichen einer Breite B eines Hohlraumes 23 des Primärbauteiles 11 entspricht, wie er in Fig. 2, 3 und 4 dargestellt ist.

In Fig. 2 ist ein Sekundärbauteil 12 mit einem in einem Langloch 24 angeordneten Befestigungselement 13 dargestellt. Das Sekundärbauteil 12 ist so auf das Primärbauteil 11 aufgesetzt worden, daß der Klemmkörper 16 des Befestigungselementes 13 durch einen Schlitz 25 hindurch in den Hohlraum 23 des Primärbauteiles 11 hineinragt.

In Fig. 2 ist auch zu erkennen, daß das C-profilartige Primärbauteil 11 eine Wandstärke W aufweist, die größer ist, als Dicke D der Distanzscheibe 18. Die Differenz DW zwischen der Wandstärke W und der Dicke D ist darüber hinaus so dimensioniert, daß sie geringer ist als der schon zuvor beschriebene maximale Federweg Sₘₐₓ der Tellerfedern 21.

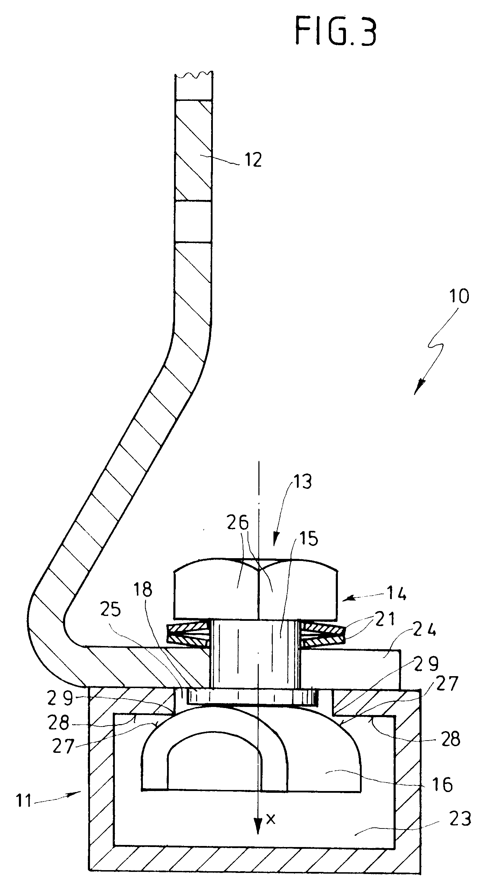

Fig. 3 zeigt die Verbindungsanordnung 10 nach Fig. 2, wobei mittels eines nicht dargestellten, an Schlüsselflächen 26 des Betätigungselements 14 angreifenden Werkzeugschlüssel das Befestigungselement 13 geringfügig nach rechts gedreht worden ist, wobei jedoch noch keine Verklemmung mit dem Primärbauteil 11 erfolgt ist. Während die Verbindungsanordnung 10 insgesamt im Schnitt gezeichnet ist, wird der Klemmkörper 16 in Ansicht dargestellt.

Man erkennt, daß sich die Oberfläche des konvexen, gewölbten Klemmkörpers 16 im Bereich von ansteigenden Spannflächen 27 tendenziell Hintergriffsflächen 28 des Primärbauteils 11 nähert.

Bei weiterer Drehung des Befestigungselements 13 mit Hilfe eines Schlüssels, wirken Kantenbereiche 29 des Primärbauteils 11 so mit den ansteigenden Spannflächen 27 zusammen, daß der Klemmkörper 16, wie auch das Befestigungselement 13 insgesamt entgegen der Kraft der Tellerfedern 21 in Richtung des Pfeiles X gezogen werden. Während dieses Vorganges verringert sich kontinuierlich der Abstand S zwischen den Tellerfedern 21, wie auch die Differenz DW. Je weiter das Befestigungselement 13 gedreht wird, um so weiter wird das Befestigungselement 13 einerseits in X-Richtung gezogen, und andererseits legen sich im Scheitelbereich des Klemmkörpers 16 beidseitig des Schaftes 15 gelegene Klemmflächen 30 mehr und mehr an die Hintergriffsflächen 28 des Primärbauteils 11 an.

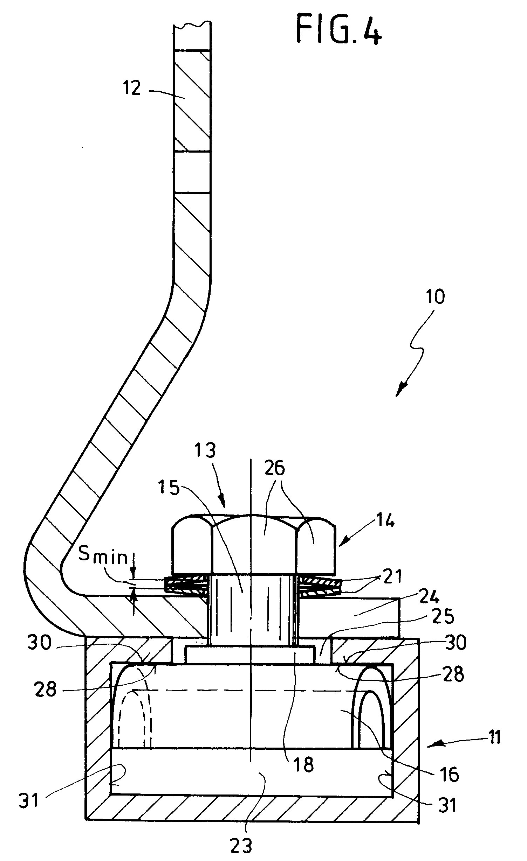

Die in Fig. 4 dargestellte Situation zeigt nun, wie der Klemmkörper 16 - der wiederum in Ansicht gezeichnet ist - nach einer Drehung um ca. 90^{o} beidseitig an als Drehbegrenzungsanschläge wirkende Innenseiten 31 des Primärbauteiles 11 anschlägt. Darüber hinaus ist nunmehr zu erkennen, daß der als Klemmfläche 30 dienende Scheitelbereich des Klemmkörpers 16 an den Hintergriffsflächen 28 vollständig anliegt, so daß insgesamt eine sichere Verklemmung zwischen Primärbauteil 11 und Sekundärbauteil 12 erreicht wird.

Sehr wichtig für die Zuverlässigkeit dieser Verbindung ist, daß auch in diesem Zustand zwischen den beiden Tellerfedern 21 noch ein Rest Federweg Sₘᵢₙ, wie dargestellt, verbleibt. Falls nämlich die Tellerfedern 21 im Block aufeinandergezogen würden, wäre eine zuverlässige Klemmung der zu verbindenden Bauteile nicht mehr gewährleistet.

Die in den folgenden Figuren dargestellten, besonders ausgebildeten Sekundärbauteile 12 dienen zur Verbindung von ein oder mehreren Primärbauteilen 11 unter Einsatz eines oder mehrerer Befestigungselemente 13, wobei die Sekundärbauteile so ausgebildet sind, daß eine Vormontage eines oder mehrerer Befestigungselemente 13 möglich ist.

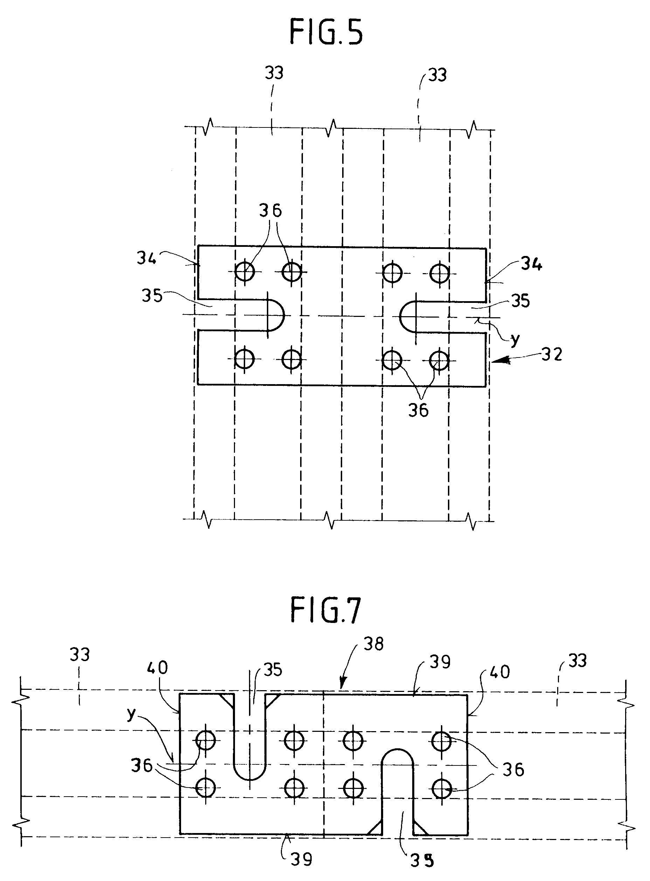

In Fig. 5 ist als Sekundärbauteil eine rechteckförmige Lasche 32 dargestellt, die zur Verbindung zweier paralleler, gestrichelt dargestellter Primärbauteile 11 dient. Bei dem dargestellten Primärbauteil 11 handelt es sich um C-Profilschienen 33. Die Lasche 32 weist jeweils an den kurzen Stirnseiten 34 langlochartige, zur Stirnseite 34 einseitig offene Ausnehmungen 35 auf. Beidseitig der beiden langgestreckten Ausnehmungen 35 sind jeweils zwei beabstandet angeordnete, warzenartige Ausprägungen 36 vorhanden, die beim Befestigen der C-Profile 33 als Zentrierhilfen dienen.

Vor der Verbindung zweier C-Profilschienen 33 wird jeweils ein nicht dargestelltes Befestigungselement 13 in die langlochartige Ausnehmung eingeschoben, wobei dann die Lasche 32 so auf die parallel nebeneinander liegenden, quer zu einer Längsachse y der Lasche 32 angeordneten C-Profilschienen 33 aufgesetzt wird, daß einerseits die Ausprägungen 36 und andererseits auch der Klemmkörper 16 in den Schlitz 25 sowie in den Hohlraum 33 der C-Profilschienen hineinragen (s. Fig. 2, 3 und 4). Durch eine einfach und schnell zu bewerkstelligende Drehung der beiden Befestigungselemente 13 um je 90^{o} ist dann eine zuverlässige Verbindung zwischen den beiden C-Profilschienen 33 hergestellt.

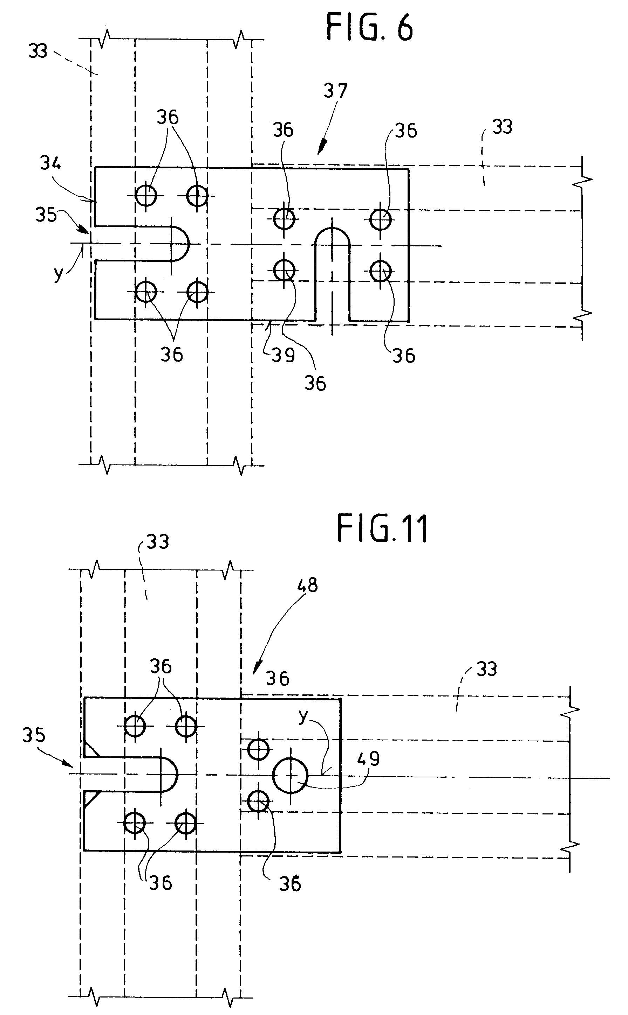

Eine Lasche 37 zur T-förmigen Verbindung zweier C-Profilschienen 33 ist in der Fig. 6 zu erkennen. Während eine langlochartige Ausnehmung 35 sowie die dazugehörigen warzenförmigen Ausprägungen 36 so angeordnet sind, wie in dem Ausführungsbeispiel nach Fig. 5, ist eine zweite langlochartige Ausnehmung 35 einschließlich der warzenförmigen Ausprägung 36 um 90^{o} gedreht in der Lasche 37 angeordnet. Im Bereich der erstgenannten Ausnehmung 35 kann die quer zu einer Längsachse y der Lasche 32 orientierte C-Profilschiene 33 mit Hilfe eines Befestigungselementes 13 angeordnet werden, während durch das in der zuletzt genannten langlochartigen Ausnehmung 35 gehaltenen Befestigungselement 13 die in Längsachse y verlaufende C-Profilschiene 33 an der Lasche 32 befestigt werden kann.

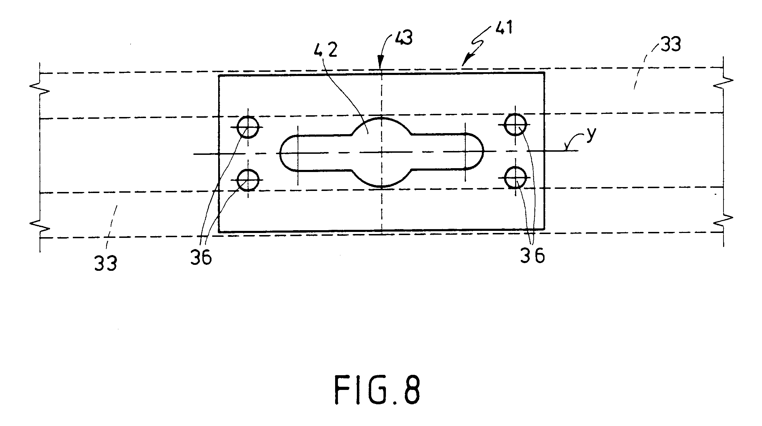

Zur in Längsrichtung y der Lasche 38 angeordneten Verbindung zweier stirnseitig aneinanderstoßenden C-Profilschienen 33 weist eine in Fig. 7 dargestellte Lasche 38 an ihren Längsseiten 39 - beabstandet voneinander - nahe der Stirnseiten 40 wiederum jeweils eine langlochartige Ausnehmung 35 einschließlich der zugehörigen Ausprägungen 36 auf.

Fig. 8 zeigt eine als Sekundärbauteil dienende Lasche 41, welche eine sich in Längsachse y der Lasche 41 erstreckende doppel-schlüssellochartige Ausnehmung 42 aufweist. Die Ausnehmung 42 besteht aus einem mittleren kreisförmigen Bereich sowie beidseitig davon angeordnete, langlochartige Erweiterungen. Beidendig der schlüssellochartigen Ausnehmung 42 sind darüber hinaus jeweils zwei Ausprägungen 36 angeordnet.

Mit Hilfe der Lasche 41 ist es wiederum möglich, zwei in Richtung der Längsachse y der Lasche 41 aneinanderstoßende C-Profilschienen 33 stirnseitig miteinander zu verbinden. Dazu wird zunächst jeweils ein Befestigungselement 13 in jeder langlochartigen Erweiterung der Ausnehmung 42 verklemmt und dann die Lasche 41 auf die beiden C-Profilschienen 33 so aufgesetzt, daß der Übergangsbereich 43 zwischen den beiden C-Profilschienen 33 etwa mittig der schlüssellochartigen Ausnehmung 42 verläuft. Durch einfache Drehung beider Befestigungselemente 13 jeweils um 90^{o} wird eine feste Verbindung der C-Profilschienen 33 erzielt.

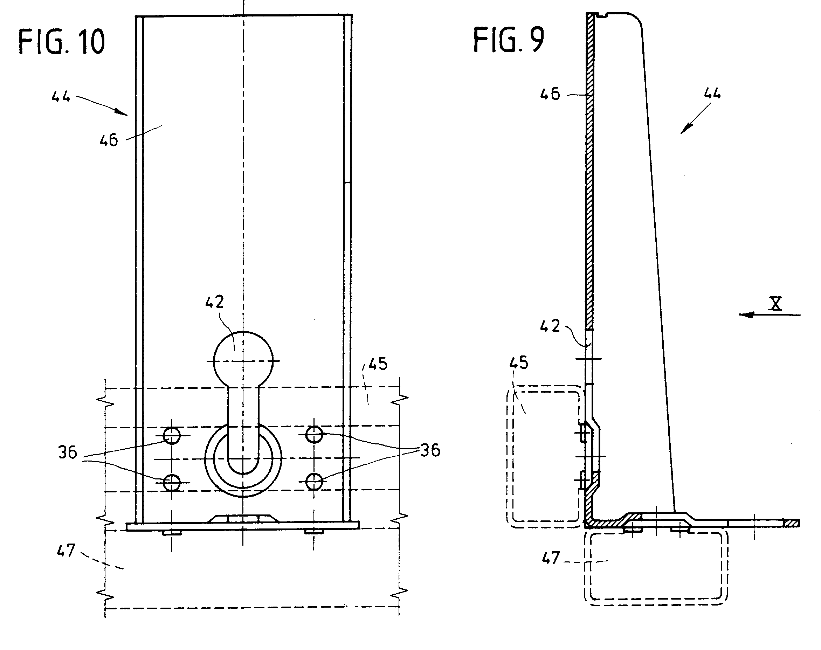

Fig. 9 und 10 zeigen des weiteren einen als Sekundärbauteil ausgebildeten Haltewinkel 44, der mittels der Befestigungselemente 13 alternativ mit unterschiedlichen C-Profilschienen verbunden werden kann. Bei Anbringung eines Haltewinkels 44 an eine C-Profilschiene 45 dient der lange Schenkel 46 des Haltewinkels 44 zur Befestigung von Fermacell-Verkleidungsplatten an der Vorderfront der Vorwände. Durch alternative Anbringung des Haltewinkels 44 an eine C-Profilschiene 47 wird es insbesondere möglich, im Eck- bzw. Endbereich einer sanitären Vorwand ebenfalls Verkleidungsplatten zu befestigen.

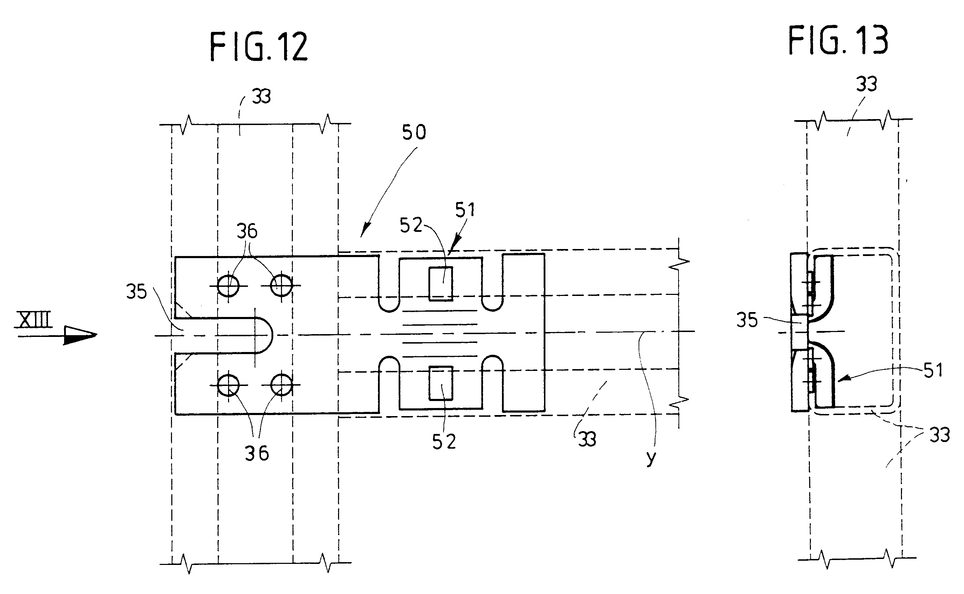

In Fig. 11 ist eine Lasche 48 als Sekundärbauteil dargestellt, die zur T-förmig aneinanderstoßenden Befestigung zweier C-Profilschienen 33 dient. Im Unterschied zu den vorher beschriebenen Sekundärbauteilen 12 weist die Lasche 48 einerseits eine langlochartige Ausnehmung 35 zur Anordnung eines zuvor beschriebenen Befestigungselementes 13 auf. Andererseits ist die Lasche 48 auch darüber hinaus mit einer Bohrung 49 versehen, durch die ein herkömmlicher, nicht dargestellter Schraubbolzen unterseitig der Lasche 48 mit einem ebenfalls nicht dargestellten Nutenstein bzw. einer Gewindeplatte verbunden werden kann. Mit Hilfe dieses zuletzt beschriebenen Befestigungselementes wird die Lasche 48 an eine C-Profilschiene 33 montiert, wobei diese vormontierte Anordnung beim Einbau einer Vorwand auf mit Hilfe des Befestigungselements 13 einfache und schnelle Weise mit einer weiteren C-Profilschiene 33 verbunden werden kann.

Letztlich ist auch eine Lasche 50 nach den Fig. 12 und 13 denkbar, die einseitig - wie bei der Lasche nach Fig. 11 - eine langlochartige Ausnehmung 35 zur Befestigung einer quer zur Längserstreckung y verlaufenden C-Profilschienen 33 aufweist. Darüber hinaus wird jedoch eine quer dazu in Längserstreckung y der Lasche 50 verlaufende Profilschiene 33 über einen Klemmbereich 51 der Lasche 50 angeordnet. Dieser Klemmbereich 51 ist so verformt, daß bei Einschieben des Bereichs 51 der Lasche 50 in die C-Profilschiene 33 ein Klemmschluß erreicht wird. Zur Sicherung dieser Verbindung werden darüber hinaus Wandabschnitte der C-Profilschiene 33 maschinell in bereits vor der Montage hergestellte, im Klemmbereich 51 angeordnete Ausprägungen 52 gedrückt. Auch diese Lasche 50 wird sinnvollerweise vormontiert an eine Baustelle angeliefert und dann mittels des an der Lasche 50 Befestigungselements 13 an einer Vorwand befestigt.

## Patentansprüche

1. Verbindungsanordnung (10) für Montagebauteile (11, 12), insbesondere zur Vorwandmontage von Sanitärbauteilen, mit einem Befestigungselement (13) zur Verbindung mindestens eines eine schlitzartige Öffnung (25) aufweisenden Primärbauteils (11), wie z.B. C-Profil, Langlochlasche od. dgl., mit einem Sekundärbauteil (12), auf welchem sich das Betätigungselement (14) mit einer Widerlagerfläche (20) abstützt und bei seiner Drehbetätigung in Spannrichtung mittels eines Schaftes (15), der das Sekundärbauteil (12) durchsetzt und der mit einem Klemmkörper (16) drehfest und mindestens zugfest verbunden ist, zwei beiderseits des Schaftes (15) angeordnete und sich quer zur Schaftlängsachse (bei x) erstreckende Klemmflächen (30) eines Klemmkörpers (16) gegen die schlitzartige Öffnung (25) begrenzende Hintergriffsflächen (28) zieht, dadurch gekennzeichnet, daß das Betätigungselement (14) zum Zwecke einer Drehverstellung des Klemmkörpers (16) auch drehfest mit dem Schaft (15) verbunden ist, daß sich an jede Klemmfläche (30), bezüglich der jeweiligen Drehverstellrichtung vorgelagert, eine zur Schaftlängsachse (bei x) geneigte und in Drehverstellrichtung gegen die benachbarte Hintergriffsfläche (28) ansteigende Spannfläche (27) anschließt und daß die Drehverstellung der Spannfläche (28) entgegen einer in Schaftlängsrichtung (bei x) wirkenden Federrückstellkraft erfolgt.

2. Verbindungsanordnung nach Anspruch 1, dadurch gekennzeichnet, daß dem Klemmkörper (16) Drehbegrenzungsanschläge (31) zugeordnet sind.

3. Verbindungsanordnung nach Anspruch 1, dadurch gekennzeichnet, daß die Bauteile (11, 12) durch eine Drehverstellung des Klemmkörpers (16) um ca. 90° aneinander befestigbar sind.

4. Verbindungsanordnung nach Anspruch 1 bis 3, dadurch gekennzeichnet, daß Betätigungselement (14), Schaft (15) und Klemmkörper (16) einstückig-stoffschlüssig ausgebildet sind.

5. Verbindungsanordnung nach Anspruch 1, dadurch gekennzeichnet, daß das Betätigungselement (14) und der Schaft (15) als Bolzen ausgebildet ist, der einen mit Schlüsselflächen (26) versehenen Bolzenkopf aufweist, und daß die Bauteile (11, 12) zwischen einer zum Sekundärbauteil (12) weisenden, durch die Unterseite des Bolzenkopfes gebildeten Widerlagerfläche (20) und einer weiteren ebenfalls zum Sekundärbauteil (12) weisenden, durch die Klemmfläche (30) des Klemmkörpers (16) gebildeten Widerlagerfläche verspannbar sind.

6. Verbindungsanordnung nach einem der vorangehenden Ansprüche, dadurch gekennzeichnet, daß zwischen dem Sekundärbauteil (12) und der Widerlagerfläche (20) des Betätigungselements (14) mindestens ein Druckfederelement (21) angeordnet ist.

7. Verbindungsanordnung nach Anspruch 6, dadurch gekennzeichnet, daß das Druckfederelement aus zwei Tellerfedern (21) besteht.

8. Verbindungsanordnung nach einem der vorangehenden Ansprüche, dadurch gekennzeichnet, daß auf dem Schaft (15) zwischen der Unterseite des Sekundärbauteils (12) und der Klemmfläche (30) eine Distanzscheibe (18) angeordnet ist.

9. Verbindungsanordnung nach Anspruch 8, dadurch gekennzeichnet, daß die Dicke (D) der Distanzscheibe (18) geringer ist als die Wandstärke (W) des Primärbauteils (11).

10. Verbindungsanordnung nach einem der vorangehenden Ansprüche, dadurch gekennzeichnet, daß der Gesamtfederweg (Sₘₐₓ) größer ist als die Differenz (DW) zwischen der Dicke der Distanzscheibe (18) und der Wandstärke (W) des Primärbauteils (11).

11. Verbindungsanordnung nach einem der vorangehenden Anspruch , dadurch gekennzeichnet, daß der freie Endbereich des Bolzens (15) einen Vierkant aufweist, der mit einer entsprechenden Vierkant-Durchbrechung des Klemmkörpers (16) drehfest zusammmenwirkt, und daß die zugfeste Verbindung von Bolzen (15) und Klemmkörper (16) über ein unterseitig des Klemmkörpers (16) angeordneten Seegerring erfolgt.

12. Verbindungsanordnung nach einem der vorangehenden Ansprüche, dadurch gekennzeichnet, daß der Klemmkörper (16) bezüglich der Schaftlängsachse einen symmetrisch konvexen Querschnitt aufweist, dessen Scheitelbereich die Klemmfläche (30) und dessen beiderseits der Klemmflächen (30) angeordneten, gewölbten Flächenbereiche die Spannflächen (27) bilden.

13. Verbindungsanordnung nach einem der vorangehenden Ansprüche, daß jedes plattenartige Primärbauteil (11) Drehbegrenzungsanschläge in Form von warzenartigen Ausprägungen aufweist.

14. Verbindungsanordnung nach Anspruch 1, dadurch gekennzeichnet, daß der dem Bolzenkopf (14) gegenüberliegende freie Endbereich des Bolzens (15) in zwei Bolzenteile gespalten ist, die um ca. 90° jeweils nach außen gebogen einen das Primärbauteil (11) hintergreifenden, federnden Klemmkörper (16) ausbilden.

15. Verbindungsanordnung nach Anspruch 1, dadurch gekennzeichnet, daß zur Verbindung mindestens zweier Primärbauteile (11) das Sekundärbauteil (12) als Lasche (32, 37, 38, 41) ausgebildet ist, welche mindestens eine, zur Anordnung zweier Befestigungselemente (13) geeignete, langlochartige Ausnehmung (35) aufweist.

16. Verbindungsanordnung nach Anspruch 15, dadurch gekennzeichnet, daß die Lasche zur (32) Verbindung zweier paralleler Primärbauteile mittels der Befestigungselemente zwei quer zu den Längsachsen der Primärbauteile (11), im Bereich der Stirnseiten (34) angeordnete, langlochartige Ausnehmungen (35) aufweist.

17. Verbindungsanordnung nach Anspruch 15, dadurch gekennzeichnet, daß die Lasche (37) zur T-artigen Verbindung zweier Primärbauteile (11) eine im Bereich einer Stirnseite (34) und eine im Bereich einer Längsseite (39) angeordnete Ausnehmung (35) aufweist, deren Längsachsen einen Winkel von 90° aufspannen.

18. Verbindungsanordnung nach Anspruch 15, dadurch gekennzeichnet, daß die Lasche (38) zur Verbindung zweier stirnseitig aneinanderstoßender Primärbauteile (11) mittels der Befestigungselemente (13) zwei quer zur Längsachse der Primärbauteile (10), beabstandet im Bereich der gegenüberliegenden Längsseiten (39) der Lasche (38) angeordnete Ausnehmungen (35) aufweist.

19. Verbindungsanordnung nach Anspruch 15, dadurch gekennzeichnet, daß die Lasche (41) zur Verbindung zweier stirnseitig aneinanderstoßender Primärbauteile (11) mittels der Befestigungselemente (13) eine schlüssellochartige, in Richtung der Längsachsen der Primärbauteile (11) verlaufende Ausnehmung (41) aufweist.

20. Verbindungsanordnung nach einem der vorangehenden Ansprüche, daß die Ausnehmungen (35) im Sekundärbauteil (12) zum Zwecke der einfachen Vormontage von Sekundärbauteil (12) und Befestigungselement (13) einseitig offen sind.

21. Verbindungsanordnung nach einem der vorangehenden Ansprüche, dadurch gekennzeichnet, daß das Sekundärbauteil (12) mit mindestens einem Zentrieranschlag (36) versehen ist, welcher mit dem jeweiligen Primärbauteil (11) zusammenwirkt.

22. Verbindungsanordnung nach Anspruch 21, dadurch gekennzeichnet, daß die Zentrieranschläge als warzenartige Ausprägungen (36) ausgebildet sind.
